# EUROPÄISCHE PATENTANMELDUNG

(11) **EP 1 531 554 A1**
(43) Veröffentlichungstag der Anmeldung: **18.05.2005**
(21) Anmeldenummer: 05003651.6
(22) Anmeldetag: 30.06.1998
(51) Int. Cl.: H04B 1/66

(54) **Verfahren und Vorrichtung zum Codieren von Signalen**

(30) Priorität: 01.07.1997 DE 19727938
(62) Teilanmeldung aus: 98939562.9
(71) Anmelder: MAYAH Communications GMBH, 85399 Hallbergmoos (DE)
(72) Erfinder: Wiese, Detlef, 85354 Freising (DE); Rimkus, Jörg, 24943 Flensburg (DE)
(74) Vertreter: Eisenführ, Speiser & Partner

(57) **Zusammenfassung**

Die Erfindung betrifft ein Verfahren zum Codieren von Signalen (T_{E}), insbesondere digitalisierten Tonsignalen, mit einer Codiereinrichtung (C1,C2) zur Codierung des Signals (T_{E}) in einem Codierformat und einer Verarbeitungseinrichtung (U1,U2,SP,D1) zur Verarbeitung des codierten Signals, wobei das Codierformat in Abhängigkeit von den Eigenschaften der Verarbeitungseinrichtung (U1,U2,SP,D1) bestimmt wird.

## Beschreibung

Die Erfindung betrifft ein Verfahren zum Codieren von Signalen, insbesondere digitalisierten Tonsignalen, mit einer Codiereinrichtung zur Codierung des Signals in einem Codierformat und einer Verarbeitungseinrichtung zur Verarbeitung des codierten Signals.

Derartige Verfahren sind beispielsweise aus der europäischen Patentschrift 290581 bekannt. Dort werden bei der bitratenreduzierenden Codierung von Tonsignalen, die bereits in digitalisierter Form, z.B. 48 kHz Abtastfrequenz / 16-bit-Auflösung, vorliegen, psychoakustische Phänomene der Wahrnehmung von Tonsignalen derart genutzt, daß die ursprüngliche Bitrate der Tonsignale erheblich reduziert wird. Solche Verfahren sind auch unter der Bezeichnung "Quellcodierung" geläufig und standardisiert (ISO 11172 und 11318).

Bei einigen Codierverfahren gibt es ferner die Möglichkeit, das Signal in einem bestimmten Übertragungs- bzw. Speicherformat zu codieren, um anschließend das Signal übertragen und/oder speichern zu können. Diese Codierung führt jedoch häufig zu der Notwendigkeit, die Signale umzucodieren hinsichtlich des verwendeten Übertragungs- bzw. Speicherformats, da der dann tatsächlich verwendete Übertragungskanal oder die tatsächlich verwendete Speichervorrichtung ein anderes Codierformat verwendet. Dies führt dazu, wenn die notwendigen Umcodieralgorithmen zur Umcodierung des Signals zur Anpassung an das tatsächliche Codierformat nicht vorhanden sind, daß eine vollständige Decodierung des Signals in ein lineares, nicht datenreduziertes Format und eine anschließende Codierung in das gewünschte Format vorgenommen werden muß. Dies führt häufig zu mehr oder weniger starken Qualitätsverlusten. Entweder es wird dieser aufwendige Weg gegangen oder eine Anpassung ist nicht möglich.

Aufgabe der Erfindung ist es, ein Verfahren der eingangs erwähnten Art zur Verfügung zu stellen, welches die oben genannten Probleme löst und bei dem Umcodierungen nach einmal erfolgter Codierung weitestgehend vermieden werden.

Diese Aufgabe wird erfindungsgemäß dadurch gelöst, daß bei einem Verfahren der eingangs genannten Art das Codierformat in Abhängigkeit von den Eigenschaften der Verarbeitungseinrichtung bestimmt wird.

Bei dem erfindungsgemäßen Verfahren ist es insbesondere vorteilhaft, daß sendeseitig bereits eine Codierung vorgenommen wird, welche auf die Eigenschaften der angeschlossenen, die Signale weiterverarbeitenden Einrichtungen Rücksicht nimmt. Das heißt, es ist bereits bei der Codierung möglich, die für die angeschlossenen Geräte notwendigen Codierformate zu berücksichtigen und zu verwenden. Es kann insbesondere durch das vorliegende Verfahren eine Codierung vorgenommen werden, die den Möglichkeiten des ausgewählten Übertragungskanals und der empfangsseitigen Decodierung angepaßt ist, so daß das Signal in der maximal möglichen Qualität übertragen und empfangen bzw. decodiert werden kann.

Weiterhin ist es durch das erfindungsgemäße Verfahren möglich, in jedem Fall eine aufwendige Umcodierung des codierten Signals zu vermeiden, da das Signal von vornherein in dem richtigen, d.h. den angeschlossenen Geräten, z.B. dem angeschlossenen Speicher oder dem angeschlossenen Übertragungskanal entsprechenden Format codiert wird. Das Verfahren ermöglicht daher nicht nur eine qualitativ höherwertige sondern auch eine schnellere Übertragung von Signalen.

Eine besonders vorteilhafte Ausführungsform der Erfindung zeichnet sich dadurch aus, daß vor der Festlegung des Codieralgorithmus die Eigenschaften bzw. die Eigenschaftsparameter der gewählten Übertragungs- und/oder Speicher- und/oder Decodiereinrichtungen mit Hilfe eines oder mehrerer an die entsprechende Einrichtung gerichteter Testsignale ermittelt werden. Somit ist es dank des erfindungsgemäßen Verfahrens möglich, das zu verwendende Codierformat bzw. den anzuwendenden Codieralgorithmus direkt an die tatsächlich jeweils angeschlossenen Einrichtungen, wie etwa Übertragungskanäle, Speicher oder empfangsseitige Decodiereinrichtungen anzupassen. Eine Person, die Signale übertragen möchte, braucht daher bei dem erfindungsgemäßen Verfahren aufgrund des Testsignals nicht mehr festzustellen bzw. abzugleichen, um welche angeschlossenen Geräte, wie etwa Übertragungskanal, Speicher oder empfangsseitige Decodiereinrichtungen, es sich handelt, wenn sie Signale übertragen oder versenden möchte. Es ist jedoch auch bei der erfindungsgemäßen Lösung möglich, vor der eigentlichen Codierung per Hand die entsprechenden Parameter zur Auswahl des gewünschten Codierformates vorzugeben, um beispielsweise eine Übertragung auch mit Geräten zu ermöglichen, die mit Hilfe des Testsignals nicht erkannt werden. Daher ist mit Hilfe des erfindungsgemäßen Verfahrens in jedem Fall eine Anpassung des Codierformates an die eingesetzten Geräten möglich.

Wenn es sich bei dem zu versendenden Signal um ein digitalisiertes Tonsignal handelt und das Signal quellencodiert, d.h. bitratenreduziert vorliegt, ist folgendes durch das erfindungsgemäße Verfahren möglich: Wenn Übertragungs- und/oder Speichereinrichtungen verschiedener Kapazität zur Verfügung stehen, kann unter Berücksichtigung der nach der bitratenreduzierten Codierung noch zu übertragenden Datenmenge ein mit entsprechender Kapazität versehene Übertragungskanal oder eine mit entsprechender Kapazität versehene Speichereinrichtung gewählt werden. So ist es z.B. bei Signalen geringerer Qualität oder bei geringeren Anforderungen an die Empfangsqualiltät, d.h. mit höherer Redundanz, möglich, einen Übertragungskanal kleinerer Kapazität zu wählen und somit gegebenenfalls Kosten zu sparen.

Die Erfindung findet beispielsweise Anwendung bei einer Übertragung bzw. Speicherung datenreduzierter Tonsignale, die beispielsweise in den Formaten G.711, G.722, MPEG1/2-Layer 1, 2, 3 oder MPEG 4 vorliegen. Die Erfindung läßt sich auf alle Systeme anwenden, beispielsweise Transformations- und Teilbandcodierverfahren, adaptive und nicht-adaptive Pulscodemodulationsverfahren mit linearer und nicht-linearer Quantisierung, Kombinationen daraus und andere Toncodierverfahren.

Weiterhin macht sich die Erfindung bestimmte Eigenschaften derartiger Verfahren zunutze. Typischerweise benötigen zu übertragende bzw. zu speichernde und datenreduzierte Tonsignale nur eine geringe Übertragungs- bzw. Speicherkapazität. Dies führt dazu, daß Tonsignale auch über schmalbandige Leitungen in Echtzeit übertragen werden können. Dabei wird die Datenrate der Tonsignale so gewählt, daß die entweder den qualitativen Ansprüchen bzw. den wirtschaftlichen Anforderungen genügen. Eine hohe Datenrate weist eine entsprechend hohe Qualität auf, andererseits benötigt sie auch eine größere Kanal- bzw. Speicherkapazität, was wiederum höhere Kosten verursacht. Bei sehr schmalbandigen Übertragungskanälen muß, wenn keine breitbandigen Kanäle zur Verfügung stehen, die Übertragung hoch qualitativer, d.h. große Datenmengen aufweisender Tonsignale in einer n-fachen Echtzeit mit n > 1 durchgeführt werden.

Besonders bevorzugt ist daher eine Ausführungsform der Erfindung bei der bitratenreduzierte Tonsignale zu versenden sind und mehrere Übertragungskanäle und/oder Bitraten zur Übertragung der Tonsignale zur Verfügung stehen. Dann kann aufgrund des erfindungsgemäßen Verfahrens der Übertragungskanal und/oder die Bitrate bei der Übertragung der Tonsignale derart gewählt werden, daß das Tonsignal in Echtzeit oder sogar schneller als Echtzeit übertragen werden kann.

Vorteilhafte Weiterbildungen und Ausgestaltungen des erfindungsgemäßen Verfahrens ergeben sich aus den Unteransprüchen.

Darüber hinaus ist Aufgabe der Erfindung, eine Vorrichtung zum Codieren von Signalen zur Verfügung zu stellen, welche die eingangs genannten Probleme vermeidet und eine Umcodierung des Signals nach einer erfolgten Codierung nicht mehr notwendig ist.

Diese Aufgabe wird erfindungsgemäß durch eine Vorrichtung zum Codieren von Signalen gelöst, welche eine Steuereinrichtung aufweist, die das für die Codierung zu verwendende Codierformat in Abhängigkeit der Eigenschaften einer Verarbeitungseinrichtung zur folgenden Verarbeitung der Signale vorgibt.

Der Vorteil der erfindungsgemäßen Vorrichtung liegt darin, daß das Codierformat von vornherein die weitere Verarbeitung, d.h. beispielsweise die Übertragung oder Speicherung des Signals, berücksichtigt. Dadurch kann es nicht zu einer falschen Codierung des Signals in dem Sinne kommen, daß das Signal in einem Codierformat codiert wird, welches nicht zu den gewählten Übertragungs- oder Weiterverarbeitungseinrichtungen paßt, wie z.B. einer Speichereinrichtung.

In einer besonders bevorzugten Ausführungsform der Erfindung, ist es möglich, mit Hilfe einer Steuereinrichtung, die einen Testsignalgeber aufweist, der ein Testsignal aussendet, mit dessen Hilfe die Steuereinrichtung die Eigenschaften der angeschlossenen Einrichtung, so z.B. die Bitrate des angeschlossenen Übertragungskanals, feststellt, das Codierformat entsprechend mit Hilfe der Steuereinrichtung automatisch zu wählen. Der Benutzer braucht daher nicht manuell in den Auswahlvorgang des gewünschten Codierformates einzugreifen. Es kommt daher vorteilhaft zu einer erheblichen Bedienungsvereinfachung. Denn es ist zum einen eine manuelle Einstellung des Codierformates überflüssig, und darüber hinaus kommt der Benutzer der Vorrichtung auch nicht in Verlegenheit, wenn er - beispielsweise als Laie - die entsprechenden Kenntnisse über den Übertragungskanal oder die empfangsseitigen Decodierungsmöglichkeiten nicht hat. Die Erfindung zeichnet sich daher besonders durch ihre Benutzerfreundlichkeit aus.

Bei einer weiteren Ausführungsform der Erfindung ist an der Steuereinrichtung eine Anzeige-Eingabeeinrichtung vorgesehen, die es ermöglicht, daß ein Benutzer ein zu verwendendes Codierformat vorgibt. Somit kann auch dann das richtige Codierformat gewählt werden, wenn das zu der gewählten Übertragungseinrichtung oder Speichereinrichtung oder Decodiereinrichtung passende Format nicht bekannt ist und auch ein Erkennen mit Hilfe des Testsignals nicht möglich ist. Besonders bevorzugt ist es dabei, daß der Benutzer aus vorgegebenen Formaten auswählen kann; es ist jedoch auch möglich, daß der Benutzer völlig frei eine bestimmte Codierung vorgibt oder gar eine Codierung ganz unterbindet.

Weitere vorteilhafte Ausführungsformen der erfindungsgemäßen Vorrichtung sind in den Unteransprüchen angegeben.

Die Erfindung wird nun anhand eines Ausführungsbeispiels gemäß der beigefügten Zeichnungen näher erläutert. Es zeigen:
- Figur 1: ein Blockschaltbild des sendeseitigen Aufbaus einer Ausführungsform der erfindungsgemäßen Vorrichtung zum Codieren von Signalen bzw. eine Möglichkeit zur Ausführung des erfindungsgemäßen Verfahrens; und
- Figur 2: ein Blockschaltbild einer empfangsseitigen Decodier- und Speichereinrichtung zum weiteren Veranschaulichen der Erfindung.

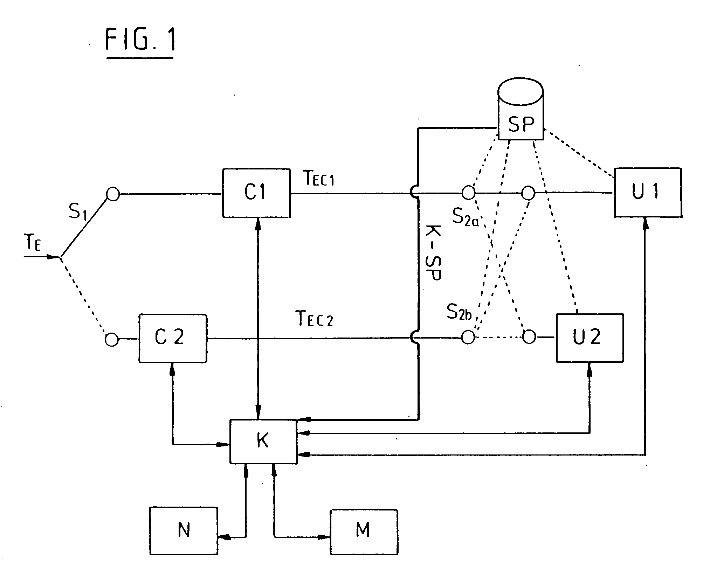

Die Figur 1 zeigt ein Blockschaltbild des sendeseitigen Aufbaus einer Anlage zur Realisierung einer Ausführungsform des erfindungsgemäßen Verfahrens. Gemäß Figur 1 wird ein digitalisiertes, monophones Tonsignal T_{E} entsprechend einer Schalterstellung eines Schalters S1 einem der zur Verfügung stehenden Codieralgorithmen C1 oder C2 zugeführt. Das Ausgangssignal T_{EC1} bzw. T_{EC2} der Codieralgorithmusstufe C1 bzw. C2 wird entsprechend einer Schalterstellung von Schaltern S₂ₐ bzw. S_{2b} Übertragungskanälen U1 oder U2 oder einer Speichereinheit SP zugeführt. Das in der Speichereinheit SP gespeicherte Signal T_{EC1} bzw. T_{EC2} kann zu einem späteren Zeitpunkt einem der Übertragungskanäle U1 oder U2 zugeführt werden. Die Steuerung der Schalter S1, S₂ₐ und S_{2b} regelt eine Steuereinheit K in Abhängigkeit von an einer als eine Eingabe-/Anzeigeeinrichtung dienenden Benutzerschnittstelle N eingestellten und/oder von in einem Parameterspeicher M gespeicherten Eigenschaften bzw. Parameter des gewünschten Codierformates. Weiterhin kann die Steuereinheit K die Schalter S1, S₂ₐ und S_{2b} in Abhängigkeit eines zuvor an die Leitungen U1 bzw. U2 oder an den Speicher SP gesandten Testsignals steuern. Das Testsignal gibt der Steuereinheit K die Information über die Eigenschaften bzw. Parameter der Kanäle U1 oder U2 bzw. des Speichers SP. Zur Signalkommunikation zwischen dem Speicher SP und der Steuereinheit K kann eine zusätzliche direkte Verbindung K-SP hergestellt werden. Mit diesen Informationen wählt die Steuereinheit K dann das diesen Eigenschaften bzw. Parametern entsprechende Codierformat C1 oder C2, indem sie den Schalter S1 entsprechend stellt. So wird insbesondere der Parameter Bitrate der Codieralgorithmusstufe C1 bzw. C2 von der Steuereinheit K in Abhängigkeit der an der Benutzerschnittstelle N eingestellten und/oder der in dem Parameterspeicher M gespeicherten Parameter und/oder der von dem Testsignal erkannten, notwendigen Parameter für die Übertragungskanäle U1 bzw. U2 eingestellt.

Ein Benutzer kann mittels der Benutzerschnittstelle N (nicht dargestellte) Empfängerparametersätze E1, E2 oder E3 unter Verwendung eines (nicht dargestellten) Schalters selektieren und deren Daten, z.B. Bitrate, Übertragungskanal sowie gegebenenfalls auch Codieralgorithmus aus dem Parameterspeicher M auslesen. Der Benutzer kann auch mittels der Benutzerschnittstelle N die Parameter der Empfängerparametersätze ändern und abspeichern bzw. übersteuern, so daß die Parameter der Benutzerschnittstelle N und nicht die des Parameterspeichers verwendet werden. Dies kann aufgrund der aktuellen auszuführenden Übertragung und/oder Speicherung notwendig sein.

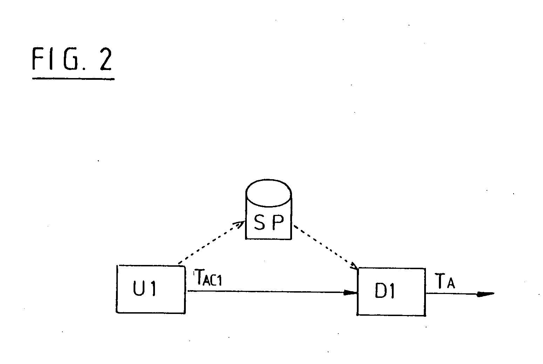

Die Figur 2 zeigt zur Veranschaulichung der Erfindung ein Blockschaltbild einer empfangsseitigen Einrichtung. Diese Einrichtung entspricht hinsichtlich der dort verwendeten Parameter dem Empfängerparametersatz E1 aus der Figur 1. Das Ausgangssignal T_{AC1} des Übertragungskanals U1 wird der Decodierungsalgorithmusstufe D1 zugeführt und dort entsprechend der Decodiervorschrift decodiert. Alternativ oder simultan kann das Ausgangssignal T_{AC1} des Übertragungskanals U1 auch der Speichereinheit SP zugeführt werden. Das Ausgangssignal der Decodieralgorithmusstufe T_{A} ist ein digitalisiertes und monophones Tonsignal.

Aufgrund des erfindungsgemäßen Verfahrens wurde der Decodierungsalgorithmus der Decodierungsalgorithmusstufe D1 beispielsweise durch ein an die Decodierungsalgorithmusstufe gesandtes Testsignal von der Steuereinheit K festgestellt. Die Codierung (siehe Fig. 1) wurde daher in Anpassung an die erkannte Decodierungsalgorithmusstufe vorgenommen. Somit erfolgt empfangsseitig eine problemlose Decodierung durch D1.

Weiterhin betrifft die Erfindung erstens eine Aufnahme-, Verarbeitungs- und Übertragungsvorrichtung eines ersten Typs zum Speichern, Verarbeiten und Übertragen von Audio-Signalen, mit einem analogen Audio-Signaleingang, insbesondere einem Mikrophon oder einem Mikrophoneingangsanschluß, einer Konvertierungseinrichtung zum Verarbeiten analoger Audio-Signale in digitale Audio-Daten und einem Speichermedium zum Speichern der digitalen Audio-Daten; zweitens eine Aufnahme-, Verarbeitungs- und Übertragungsvorrichtung eines zweiten Typs zum Speichern, Verarbeiten und Übertragen von Audio-Daten, mit einem Eingangsanschluß für digitale Audio-Daten und einem Speichermedium zum Speichern der digitalen Audio-Daten; und drittens eine Wiedergabevorrichtung zum Wiedergeben von Audiosignalen mit einem Kopfhörer oder Kopfhöreranschluß, einer Konvertierungseinrichtung zum Verarbeiten digitaler Audio-Daten in analoge Audiosignale und einem Speichermedium zum Speichern der digitalen Audio-Daten.

Es sind derartige Vorrichtungen bekannt, bei welchen analoge Signale digitalisiert und anschließend auf einem digitalen Speichermedium gespeichert werden. Solche Vorrichtungen können in der Regel ebenfalls digital eingespeiste Audio-Daten direkt auf das digitale Speichermedium aufnehmen. Außerdem sind solche Vorrichtungen bekannt, bei welchen die digital gespeicherten Audio-Daten nach einer Digital/Analog-Wandlung über einen analogen Audio-Ausgang, insbesondere einem Kopfhörer oder Kopfhöreranschluß, wiedergegeben werden können.

Derartige Vorrichtungen sind mit unterschiedlichem Funktionsumfang beispielsweise im HiFi-Bereich eingesetzt. Je nach Ausstattung der Vorrichtung eignen sich derartige HiFi-Geräte zur Aufnahme, Verarbeitung und/oder Wiedergabe der Audiosignale. In Abhängigkeit von dem genutzten Aufnahmestandard werden unterschiedliche Speichermedien benötigt. Bei dem DAT-Standard (Digital Audio Tape) und bei dem DCC-Standard (digitale Compact-Cassette) ist das Speichermedium zum Speichern der digitalen und datenreduzierten Audio-Daten ein Magnetband. Bei einem weiteren Standard, der MD (Mini-Disc), werden magneto-optische Speicherplatten als Speichermedium zum Speichern der digitalen, unter psychoakustischen Gesichtspunkten datenreduzierten Audio-Daten verwendet.

Bei den gattungsgemäßen Aufnahme-, Verarbeitungs-, Übertragungs- und Wiedergabevorrichtungen werden die Audio-Signale in digitalisierter Form auf dem Speichermedium gespeichert und können durch Abspielen bei gleichzeitig erneutem Aufnehmen mittels einer weiteren Vorrichtung verarbeitet und/oder bearbeitet werden. Das Speichermedium, auf dem die Audio-Daten gespeichert sind, kann aus der Vorrichtung entnommen und für eine spätere Verwendung verwahrt werden, wenn die gespeicherten Audio-Daten momentan nicht benötigt werden. Durch Löschen und Überspielen nicht mehr benötigter Audio-Daten oder die Verwendung eines noch nicht genutzten Speichermediums können neue Audio-Daten gespeichert werden.

Für den Fall, daß die gespeicherten Audio-Daten an einem anderen Ort benötigt werden, wird überwiegend das Speichermedium, wie beispielsweise die Cassette oder Disc, an den gewünschten Ort gebracht. Dort angekommen, wird das Speichermedium in eine entsprechende Wiedergabevorrichtung eingelegt, so daß die gespeicherten digitalen Audio-Daten verarbeitet oder nach einer Digital/Analog-Wandlung als analoge Audio-Signale wiedergegeben werden können.

Aufgabe dieser weiteren Erfindung ist es, die gattungsgemäßen Vorrichtungen derart weiterzubilden, daß insbesondere die Verarbeitung und Übertragung von Audio-Daten beschleunigt und die Bedienung der Vorrichtung erleichtert wird.

Diese Aufgabe wird bei den Aufnahme-, Verarbeitungs- und Übertragungsvorrichtungen und bei der Wiedergabevorrichtung der zuvor genannten Art erfindungsgemäß dadurch gelöst, daß das Speichermedium für einen ständigen Verbleib in der jeweiligen Vorrichtung vorgesehen ist und die Vorrichtung jeweils eine Schnittstelle für eine Übertragung der digitalen Audio-Daten zu einer vorrichtungsexternen Verarbeitungseinrichtung aufweist.

Die Vorteile dieser Erfindung liegen insbesondere darin, daß die Audio-Daten über die Schnittstelle in einfacher Weise übertragen werden können. Die digitalen Audio-Daten können dabei in einem ersten Schritt zu einem Computer übertragen werden, um anschließend in einem zweiten Schritt über eine Daten-Fernübertragungsleitung oder mittels eines elektronischen Mail-Systems an weiter entfernte Orte übermittelt zu werden. Es ist dadurch vorteilhafterweise nicht mehr nötig, das Speichermedium selbst von einem Ort an den anderen zu transportieren. Die Zeitspanne von dem Zeitpunkt einer Aufnahme eines Audio-Signals, beispielsweise mittels einer Vorrichtung des ersten oder zweiten Typs, bis zum Zeitpunkt einer Wiedergabe des aufgenommenen Audio-Signals, beispielsweise mittels einer Vorrichtung des dritten Typs, wird erheblich reduziert. Außerdem besteht nicht mehr die Gefahr, daß das Speichermedium während des Transportes der Audio-Daten beschädigt wird oder verloren geht.

Die erfindungsgemäße Ausführung kann mit einer kabellosen oder kabelbehafteten Schnittstelle ausgeführt werden.

Darüber hinaus werden bei der erfindungsgemäßen Vorrichtung zahlreiche feinmechanischen Bauteile eingespart, welche ein Auswechseln des Speichermediums bei den bekannten Vorrichtungen ermöglichen. Durch die Einsparung der feinmechanischen Bauteile wird der Fertigungsaufwand der Vorrichtung verringert. Gleichzeitig erhöht sich die Zuverlässigkeit der Vorrichtung, da insbesondere die feinmechanischen Bauteile einer Vorrichtung Ursache für Ausfälle und Probleme sind.

In einer bevorzugten Ausführungsform weist die erfindungsgemäße Vorrichtung des ersten Typs einen analogen Hochpegel-Eingangsanschluß und/oder einen digitalen Eingangsanschluß für Audiosignale auf. Diese Anschlüsse ermöglichen, daß die erfindungsgemäße Vorrichtung ebenfalls Signale von herkömmlichen analogen oder digitalen Aufnahme- und Wiedergabevorrichtungen aufnehmen, verarbeiten und übertragen kann.

Besonders bevorzugt sind bei den erfindungsgemäßen Vorrichtungen des ersten und zweiten Typs eine Konvertierungseinrichtung zum Verarbeiten digitaler Audio-Daten in analoge Audio-Daten vorgesehen, um eine Wiedergabe der gespeicherten digitalen Audio-Daten als analoge Audio-Signale zu ermöglichen.

In einer zweckmäßigen Weiterbildung weisen die erfindungsgemäßen Vorrichtungen einen Kopfhörer oder wenigstens einen Kopfhörerausgangsanschluß auf, damit sich die gespeicherten Audio-Daten nach einer Digital/Analog-Wandlung akustisch wiedergeben lassen.

Der benötigte Speicherplatz zur Speicherung der digitalen Audio-Daten läßt sich besonders bevorzugt dadurch reduzieren, daß die digitalen Audio-Daten in ein datenreduziertes Format konvertiert werden. Dazu weisen die erfindungsgemäßen Vorrichtungen eine Konvertierungseinrichtung zum Konvertieren der digitalen Audio-Daten in ein datenreduziertes Format, z.B. nach dem MPEG, AAC, AC3 oder ATRAC-Standard, auf.

Die nachfolgend beschriebenen, bevorzugten Ausführungsformen beziehen sich sowohl auf die erfindungsgemäßen Aufnahme-, Verarbeitungs- und Übertragungsvorrichtungen des ersten und zweiten Typs als auch auf die erfindungsgemäße Wiedergabevorrichtung.

Bei den erfindungsgemäßen Vorrichtungen ist das Speichermedium bevorzugt ein Flash-RAM oder ein dynamisches RAM. Durch den Einsatz derartiger RAM-Bausteine werden weitere feinmechanische Bauteile eingespart. Dadurch erhöht sich die Zuverlässigkeit der Vorrichtungen aus den vorstehend genannten Gründen weiter. Darüber hinaus ist durch den Einsatz von RAM-Bausteinen eine Verwendung eines Motors zum Transport eines Magnet-Speicher-Bandes oder einer magneto-optischen Platte unnötig, so daß während des Betriebs außerdem noch Energie eingespart wird.

Die Schnittstelle für eine kabellose Übertragung der digitalen Audio-Daten zu einer vorrichtungsexternen Verarbeitungseinrichtung ist besonders bevorzugt für eine bidirektionale Datenübertragung vorgesehen. Es lassen sich somit nicht nur digitale Daten von den Vorrichtungen auf externe Verarbeitungseinrichtungen übertragen, sondern ebenfalls von den externen Verarbeitungseinrichtungen auf die erfindungsgemäßen Vorrichtungen.

Bevorzugt handelt es sich bei der Schnittstelle um eine Infrarot-Schnittstelle, welche eine hohe Datenübertragungsrate bei gleichzeitig guter Übertragungsqualität bietet.

Bei einer weiteren bevorzugten Ausführungsform der Vorrichtungen werden die digitalen Audio-Daten in dem datenreduzierten Format in dem Speichermedium gespeichert. Dies ermöglicht eine bessere Ausnutzung der in dem Speichermedium vorhandenen Speicherkapazität. Besonders bevorzugt werden die digitalen Audio-Daten ebenfalls in dem datenreduzierten Format über die kabellose Übertragungsschnittstelle übertragen. Hierdurch wird die Übertragung der Audio-Daten zu einer vorrichtungsexternen Verarbeitungseinrichtung deutlich beschleunigt.

Desweiteren ist bevorzugt an den Vorrichtungen ein analoger Hochpegel-Ausgangsanschluß und/oder digitaler Ausgangsanschluß für Audio-Signale vorgesehen. Dies ermöglicht eine Datenübertragung in analoger oder digitaler Form an bekannte Aufnahme- und Wiedergabevorrichtungen.

Bevorzugt weisen die erfindungsgemäßen Vorrichtungen ebenfalls eine Konvertierungseinrichtung zum Dekodieren datenreduzierter Audio-Daten auf, damit neben der Datenreduktion vor dem Speichern der Audio-Daten ebenfalls ein Dekodieren der datenreduzierten Audio-Daten möglich ist, bevor diese an den digitalen Ausgangsanschluß oder an die Digital/Analog-Verarbeitungseinheit übermittelt werden.

Für eine Eingabe von Steuerbefehlen zur Steuerung der Vorrichtungen verfügen die erfindungsgemäßen Vorrichtungen bevorzugt über eine Eingabeeinrichtung. Um entsprechende Status- oder Steuerinformationen anzuzeigen, weisen die Vorrichtungen ebenfalls bevorzugt eine Anzeigeeinrichtung auf.

Damit die erfindungsgemäße Aufnahme-, Verarbeitungs- und Übertragungsvorrichtungen und die erfindungsgemäße Wiedergabevorrichtung vielseitig einsetzbar sind, sind diese vorteilhafterweise tragbar, in einem kompakten und leichten Gehäuse, ausgeführt.

Vorteilhafte Weiterbildungen der Erfindung sind durch die Merkmale der Unteransprüche gekennzeichnet.

Im folgenden wird diese weitere Erfindung anhand der Zeichnung beispielhaft erläutert. Es zeigen:

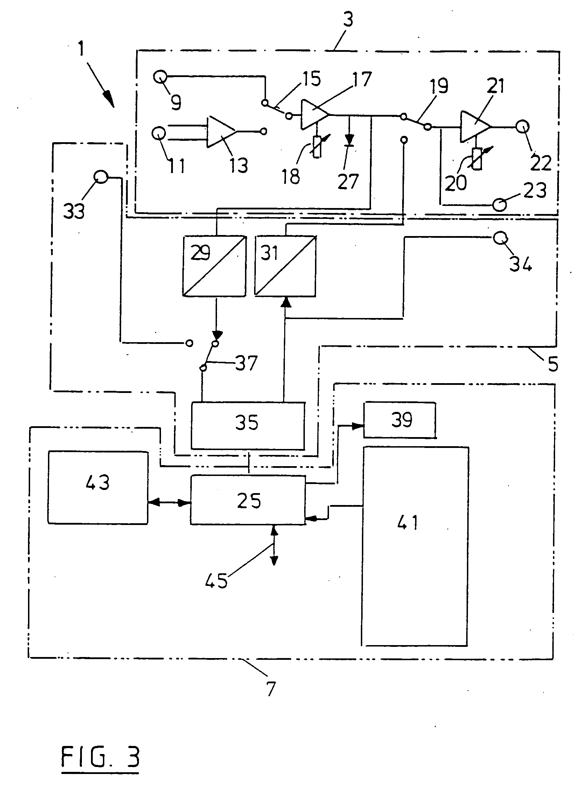

- Fig. 3: ein Blockschaltbild der erfindungsgemäßen Vorrichtung;

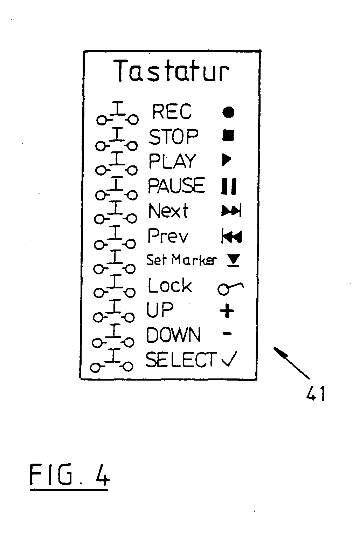

- Fig.4: eine schematische Darstellung einer Eingabeeinrichtung der Vorrichtung nach Fig. 3; und

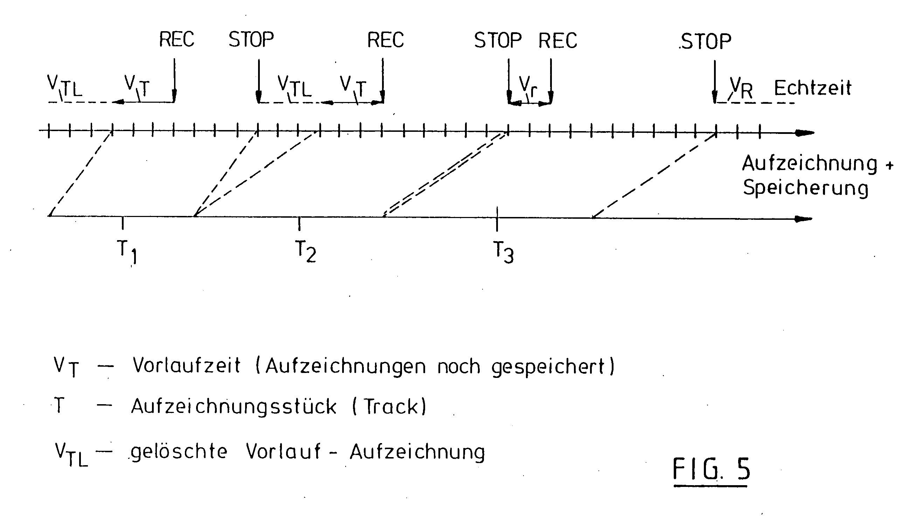

- Fig. 5: ein Zeit-Darstellungsdiagramm einer Audio-Aufnahme.

Die in Fig. 3 dargestellte Vorrichtung 1 umfaßt drei Vorrichtungsbereiche, nämlich einen analogen Signalverarbeitungsbereich 3, einen digitalen Signalverarbeitungsbereich 5 und einen digitalen Schnittstellenbereich 7.

Der analoge Signalverarbeitungsbereich 3 umfaßt einen Line-In-Eingangsanschluß 9, einen Mikrophoneingangsanschluß 11, welcher mit einem Mikrophonvorverstärker 13 verbunden ist, einen ersten Umschalter 15, mit welchem ein nachfolgender Eingangsverstärker 17 entweder mit dem Mikrophonvorverstärker oder dem Line-In-Eingangsanschluß verbunden wird, einen zweiten Umschalter 19, mit welchem eine Quelle für einen nachfolgenden Kopfhörerverstärker 21 bzw. Line-Out-Ausgangsanschluß 23 ausgewählt werden kann und einen Kopfhörerausgangsanschluß 22.

Ein an dem Mikrophoneingangsanschluß 11 anliegendes Mikrophonsignal wird durch den Mikrophonvorverstärker 13 auf den Pegel angehoben, welcher für den Line-In-Eingangsanschluß 9 typisch ist. Der erste Umschalter 15 wählt aus, ob das Mikrophonsignal oder das am Line-In-Eingangsanschluß 9 liegende Signal als Eingangssignal weitergeleitet wird. Der erste Umschalter 15 wird durch einen Mikrocontroller 25 gesteuert, welcher funktional dem digitalen Schnittstellenbereich 7 zuzuordnen ist. Der Eingangsverstärker 17 dient zum Einpegeln des Eingangssignals, wobei der Pegel des Eingangssignals mittels einer im Eingangsverstärker 17 vorgesehene Pegelsteuerung 18 über den Mikrocontroller 25 erfolgt. Eine nachgeschaltete Peak-LED 27 kann dabei vor einer Übersteuerung eines nachgeschalteten, zu dem digitalen Signalverarbeitungsbereich 5 gehörenden, Analog/Digital-Wandlers 29 warnen.

Der zweite Umschalter 19, welcher ebenfalls über den Mikrocontroller 25 gesteuert wird, wählt aus, welches analoge Signal dem Kopfhörerverstärker 21 und gleichzeitig dem Line-Out-Ausgangsanschluß 23 zugeführt wird. Dies kann entweder das von dem Eingangsverstärker 17 kommende Signal oder das analoge Signal eines Digital/Analog-Wandlers 31 sein, welcher ebenfalls Bestandteil des digitalen Signalverarbeitungsbereichs 5 ist.

Der Kopfhörerverstärker 21 dient zur Versorgung eines angeschlossenen externen Kopfhörers (nicht dargestellt), wobei die Lautstärke mittels einer in Kopfhörerverstärker integrierten Pegelsteuerung 20 ebenfalls durch den Mikrocontroller 25 erfolgt.

Der digitale Signalverarbeitungsbereich 5 umfaßt den Analog/Digital-Wandler 29, den Digital/Analog-Wandler 31, einen digitalen Eingangsanschluß 33, einen digitalen Ausgangsanschluß 34, den digitalen Signalprozessor 25 (DSP) und einen dritten Umschalter 37.

Der Analog/Digital-Wandler wandelt das von dem Eingangsverstärker 17 kommende Signal in ein lineares Digitalsignal um, welches an den digitalen Signalprozessor 35 übermittelt wird. Der Digital/Analog-Wandler 31 wandelt ein von dem digitalen Signalprozessor 35 stammendes lineares Digitalsignal, welches ebenfalls am digitalen Ausgangsanschluß 34 anliegt, in ein analoges Ausgangssignal um, welches einem Anschluß des zweiten Umschalters 19 zugeführt wird. Als Analog/Digital-Wandler 29 und Digital/Analog-Wandler 31 können beispielsweise die 24-Bit-Wandler von Crystal eingesetzt werden. Der digitale Eingangsanschluß 33 und der digitale Ausgangsanschluß 34 entsprechen in ihren Eigenschaften dem aus der Consumer-Technik stammenden Sony/Philips-Standard.

Der digitale Signalprozessor 35 ist für die Wandlung von und in ein datenreduziertes Format verantwortlich. Dabei wird insbesondere das MPEG-Audio-Format favorisiert, da dieses ein bereits weit verbreitetes Audio-Format darstellt. Als digitaler Signaprozessor 35 eignet sich beispielsweise der Motorola-56302-DSP-Baustein. Der dritte Umschalter 37 verbindet den Signaleingang des digitalen Signalprozessors 35 entweder mit dem Ausgang des Analog/Digital-Wandlers 29 oder mit dem digitalen Eingangsanschluß 33. Eine Steuerung des dritten Umschalters 37 erfolgt dabei wiederum durch den Mikrocontroller 25.

Der digitale Schnittstellenbereich 7 umfaßt eine Anzeigeeinrichtung 39, eine Eingabeeinrichtung 41, ein Speichermedium 43, als kabellose Schnittstelle eine Infrarot-Schnittstelle 45 und den Mikrocontroller 25. Auch die Ausführung einer Schnittstelle mit Kabel ist selbstverständlich möglich.

Die Anzeigeeinrichtung 39 kann dabei durch ein LC-Compact-Display mit einer Punktmatrix, beispielsweise durch das PG12232-D von Actron, ausgeführt sein.

Die Ansteuerung der Anzeigeeinrichtung 39 erfolgt dabei direkt durch den Mikrocontroller 25. Die Eingabeeinrichtung kann aus Drucktastern bestehen, welche über eine Matrix an den Mikrocontroller 25 angeschlossen sind. Das Speichermedium 43, bei welchem es sich entweder um ein Flash-RAM oder ein dynamisches RAM (SD-RAM) handelt, sollte mindestens eine Speicherkapazität von 30 Megabyte aufweisen. Das Speichermedium 43 ist dabei fest in die Vorrichtung integriert, wobei ein nachträglicher Ausbau nicht vorgesehen oder möglich ist. Eine Erweiterung der Speicherkapazität des Speichermediums 43 kann allerdings durch nachträgliches Einsetzen anderer Speicherbausteine durch geeignetes Personal erfolgen.

Die Infrarot-Schnittstelle 45 dient zum Laden und Entladen der Audio-Daten und arbeitet direkt mit einer externen Verarbeitungsvorrichtung, beispielsweise mit einem Personal-Computer (PC) (nicht dargestellt), zusammen. Die Infrarot-Schnittstelle entspricht dabei bevorzugt dem IrDA 1.1 Standard und weist eine Datenübertragungsrate von 115 kBit/s bis 4 MBit/s auf. Bei einer Anbindung über einen PC hat die Vorrichtung 1 den Status eines Slave-Device. Die Initiative zum Verbindungsaufbau erfolgt immer vom PC aus, d.h. die Schnittstelle ist zwar stets empfangsbereit, sendet aber nur, wenn sie aufgefordert wird. Während die Vorrichtung mit dem PC kommuniziert, wird diese vom PC aus mit Hilfe eines geeigneten Computer-Programmes gesteuert. Als Baustein für die Infrarot-Schnittstelle kann beispielsweise die Sharp RY5HD01 IrDA Communication Unit verwendet werden.

Der Mikrocontroller 25 steuert die unterschiedlichen Bauteile der Vorrichtung 1. Als Baustein eignet sich für den Mikrocontroller 25 beispielsweise ein Typ der 8051er Familie (8-Bit-Mikrocontroller) bis hin zu den Motorola 16-Bit-Controllern der 68000er Serie.

Als Energieversorgung (nicht dargestellt) ist bei der Vorrichtung 1 eine (wiederaufladbare) Batterie vorgesehen. Bei der Verwendung von dynamischen RAM-Bausteinen versorgt die Batterie diese auch im Stand-By-Modus. Um einen Spannungsausfall während eines Auswechselns der Batterie zu verhindern, ist im Fall, daß dynamische RAM-Bausteine eingesetzt sind, eine zusätzliche Batterie, beispielsweise eine Knopfzelle, vorgesehen. Bei der Verwendung von Flash-RAM-Bausteinen ist diese Maßnahme nicht erforderlich. Desweiteren ist an der Vorrichtung 1 eine Möglichkeit vorgesehen, Energie über ein externes Netzteil zuzuführen. Bei der Auswahl aller Bauteile wird stets auf einen möglichst geringen Energieverbrauch geachtet. Bauteile für eine Versorgungsspannung von 3 V sind bevorzugt einzusetzen.

Im Aufnahmemodus werden in Abhängigkeit der Schalterstellung des dritten Umschalters 37 entweder die digitalen Audio-Daten des digitalen Eingangsanschlusses 33 oder die digitalen Audio-Daten von dem Analog/Digital-Wandler 29 an den Eingang des digitalen Signalprozessors 35 geschaltet. Die digitalen Audio-Daten werden durch den digitalen Signalprozessor 35 in ein datenreduziertes Format, beispielsweise in einen MPEG-Datenstrom, umgewandelt und über einen Ausgang des digitalen Signalprozessors 35 an den Mikrocontroller 25 weitergeleitet und von diesem in Blöcken in dem Speichermedium 43 abgelegt. Dabei wird die freie Speicherkapazität des Speichermediums 43 ständig überprüft und in der Anzeigeeinrichtung 39 dargestellt.

Sollen Audio-Daten wiedergegeben werden, werden zuerst die Audio-Daten blockweise aus dem Speichermedium 43 ausgelesen und durch den Mikrocontroller 25 an den digitalen Signalprozessor 35 übergeben. Eine Ausgabe der Audio-Daten erfolgt nun über den digitalen Ausgangsanschluß 34 und nach einer Digital/Analog-Wandlung als analoges Audiosignal ebenfalls über den Line-Out-Ausgangsanschluß 23 und den Kopfhörerausgangsanschluß 22.

Beim Senden und Empfangen von Daten über die Infrarot-Schnittstelle 45 werden die digitalen Audio-Daten in dem datenreduzierten Format, beispielsweise im MPEG-Format, an einen angeschlossenen PC übertragen oder von diesem empfangen.

Fig. 4 zeigt schematisch eine Eingabeeinrichtung 41, welche auch in der Vorrichtung 1 aus Fig. 3 eingesetzt werden kann. Die Eingabeeinrichtung besteht aus Drucktastem, die über eine Matrix an einen Mikrocontroller angeschlossen sind. Die Eingabeeinrichtung umfaßt in der dargestellten Ausführungsform eine REC-, STOP-, PLAY-, PAUSE-, NEXT-, PREV-, SET MARKER-, LOCK-, UP-, DOWNund eine SELECT-Taste. Im Funktionsablauf der Vorrichtung 1 ist im wesentlichen jeder Taste ein Modus zugeordnet, der den Betriebszustand bezeichnet, in dem sich die Vorrichtung befindet, nachdem die entsprechende Taste gedrückt wurde. Die Vorrichtung kann in ihrem Funktionsablauf insbesondere einen REC-, STOP-, PLAY-, REC-PAUSE-, PLAY-PAUSE, NEXT-, PREV-, SET MARKER-, LOCK-, UP-, DOWN- oder SELECT-Modus einnehmen. Weitere Modi sind möglich, wenn die Vorrichtung mittels einer Menu-Steuerung betätigt wird. In Abhängigkeit des aktuellen Modus sind nur bestimmte Drucktaster aktiviert und können zur Steuerung der Vorrichtung benutzt werden.

Die REC-Taste läßt sich im REC-PAUSE- oder STOP-Modus betätigen und dient zum Starten einer Aufnahme. Jede neue Aufnahme wird als ein neuer Beitrag gekennzeichnet. Während die Aufnahme läuft, befindet sich die Vorrichtung 1 im REC-Modus. Im REC-Modus lassen sich die STOP-Taste und die SET MARKER-Taste betätigen. Durch Betätigen der STOP-Taste wird die aktuelle Aufnahme beendet; die Vorrichtung nimmt den STOP-Modus ein. Das Drücken der SET MARKER-Taste, welches auch im PLAY-Modus möglich ist, markiert die Stelle, die gerade durch die Vorrichtung aufgenommen (REC-Modus) oder wiedergegeben (PLAY-Modus) wird. Eine derartig gesetzte Markierung wird zusammen mit den Audio-Daten in der Speichereinrichtung gespeichert und dient zum leichten Wiederfinden der entsprechend markierten Stellen.

Ein Druck auf die PAUSE-Taste unterbricht die Aufnahme und bringt die Vorrichtung in den REC-PAUSE-Modus. Dieser Modus kann die Vorrichtung ebenfalls einnehmen, wenn im STOP-Modus gleichzeitig die REC- und die PAUSE-Taste gedrückt werden. In diesem Modus ruht die Aufnahme, es ist aber möglich ein Eingangssignal auf einen gewünschten Pegel auszusteuern. Durch Drücken der STOP-Taste wird in den STOP-Modus, durch Drücken der REC-Taste oder der PAUSE-Taste in den REC-Modus zurückgekehrt. Wird aus dem REC-PAUSE-Modus in den REC-Modus gesprungen, wird kein neuer Beitrag kreiert, sondern die Aufnahme des aktuellen Beitrages fortgesetzt.

Die PLAY-Taste läßt sich im PLAY-PAUSE- oder STOP-Modus betätigen und dient zum Starten einer Wiedergabe. Während die Wiedergabe läuft befindet sich die Vorrichtung 1 im PLAY-Modus. Im PLAY-Modus lassen sich die STOP-Taste und wie vorstehend beschrieben die SET MARKER-Taste betätigen. Durch das Betätigen der STOP-Taste wird die Wiedergabe beendet; die Vorrichtung nimmt wieder den STOP-Modus ein. Ein Druck auf die PAUSE-Taste unterbricht die Wiedergabe und bringt die Vorrichtung in den PLAY-PAUSE-Modus. Durch Drücken der STOP-Taste wird in den STOP-Modus, durch Drücken der PLAY-Taste oder der PAUSE-Taste in den PLAY-Modus zurückgekehrt.

Die NEXT-Taste und die PREV-Taste sind im STOP-, PLAY- und PLAY-PAUSE-Modus aktiviert und dienen dazu, von einem gespeicherten Beitrag zum nächsten oder vorhergehenden zu springen. Im PLAY-Modus kann bei der Betätigung der PLAY-Taste auch ein schneller Vorlauf mit akustischer Kontrolle vorgesehen sein, bei welchem jeder n-te Audio-Frame wiedergegeben wird.

Die LOCK-Taste, die auch als rastender Schalter ausgeführt sein kann, dient dazu, alle Funktionen und die Infrarot-Schnittstelle zu sperren.

Mit den UP-, DOWN-, und SELECT-Tasten werden weitere Funktionen, beispielsweise die Pegelsteuerung, das Löschen einzelner oder aller Beiträge, das Springen zu einzelnen Markierungen, das Löschen einzelner oder aller Markierungen und das Setzen oder Verändern einer Zeitüberwachung für einzelne Beiträge betätigt. Die Auswahl der einzelnen Funktionen erfolgt dabei im wesentlichen menu-gesteuert.

Die Drucktaster sind in drei Gruppen unterteilt, wobei jeder Gruppe eine Prioritätsstufe zugeordnet ist. In der ersten Gruppe Prio_1 befinden sich die Drucktaster, die beim Bedienen 'blind' gefunden und bedient werden. Dies sind die RECORD-, die STOP- und die SET-MARKER-Taste. Die zweite Gruppe Prio_2 umfaßt die Drucktaster, die mit einer festen Funktion belegt sind. Darunter fallen die PLAY-, die PAUSE-, die NEXT, die PREV- und die LOCK-Taste. Die dritte Gruppe Prio_3 bilden die Multifunktions-Drucktaster, denen in Abhängigkeit des Betriebszustandes des Systems oder der Menu-Steuerung unterschiedliche Funktionen zugeordnet sind. Die momentan diesen Drucktastern zugeordneten Funktionen werden entsprechend in der Anzeigeeinrichtung angezeigt. Zu dieser Gruppe zählen die UP-, die DOWN- und die SELECT-Taste. Statt der UP- und der DOWN-Taste könnte auch ein Winkelgeber-Bedienrad eingesetzt werden.

Um zu gewährleisten, daß die Drucktaster der Gruppe Prio_1 'blind' gefunden und bedient werden können, sind diese für einen Benutzer leicht zugänglich an der Vorrichtung angeordnet. Auch die Größe und Form dieser Drucktaster kann ein leichtes Finden und Betätigen erleichtern. Die Drucktaster der Gruppen Prio_2 und Prio_3 sind so angeordnet, daß diese nicht versehentlich betätigt werden können oder elektronisch deaktiviert. Auch eine mechanische Abdeckung dieser Tasten kann vorgesehen sein.

Es ist ferner möglich und zweckmäßig, wenn die erfindungsgemäße Aufnahme-, Verarbeitungs- und Übertragungsvorrichtung bereits vor Betätigung der als REC-Taste ausgebildeten Aufnahmeeingabeeinrichtung in den Aufnahmezustand versetzt ist. Das bedeutet, daß Audiosignale aufgenommen und nach dem FIFO-Prinzip (Fist-In-First-Out) für einen vorbestimmten Zeitraum (Vorlaufzeit) gespeichert werden, wenn die REC-Taste noch gar nicht betätigt worden ist. Beispielsweise kann vorgesehen werden, daß stets die Audioinformationen eines vorbestimmten vergangenen Zeitraums, z.B. der letzten fünf Minuten, aufgezeichnet und in dem Speicher festgehalten werden. Wird nun die REC-Taste gedrückt, werden die Audio-Daten, die während des Zeitraums vor Betätigung der REC-Taste aufgenommen wurden, weiter gespeichert und bilden einen Teil der gesamten Aufnahme, welche durch die REC-Taste bestimmt ist. Die vorstehende Maßnahme hat den Vorteil, daß dann, wenn der Benutzer der Aufzeichnungseinrichtung einmal die REC-Taste zu spät gedrückt haben sollte, dennoch gewährleistet ist, daß die gesamte gewünschte Aufnahme zustande kommt und somit trotz verspäteter Betätigung der REC-Taste keine Audioinformationen der gewünschten Aufzeichnung verpaßt werden. Selbstverständlich ist es auch möglich, daß die Vorlaufzeit, also die Zeiteinheit der ständig gespeicherten Informationen vom Benutzer auch individuell mittels der Eingabemittel einstellbar ist. Regelmäßig ist die Voraufnahmezeit erheblich kürzer als die Zeit, für die in der Aufnahmeeinrichtung Audiosignale gespeichert werden können. Wenn beispielsweise in der Aufnahmevorrichtung Audiosignale für eine Stunde gespeichert werden können, kann die Voraufnahmezeit im Bereich von 30 sek bis 5 Minuten liegen. In Figur 5 ist dargestellt, wie sich dann im zeitlichen Aufriß der Inhalt mehrerer Aufzeichnungsbeiträge darstellt, wenn mehrmals und zu verschiedenen Zeiten durch Betätigung der REC-Taste Aufzeichnungen getätigt wurden.

Aus der Figur 5 ergibt sich, daß dann, wenn zu verschiedenen Zeiten die REC-Taste betätigt worden ist, stets auch ein kurzer Zeitraum vor der Betätigung der REC-Taste-VT-Vorlaufzeit (Aufzeichnung noch gespeichert) die Aufzeichnung wie das eigentliche Aufzeichnungsstück T (Track) erhalten bleibt. Die Aufnahme, welche vor der Vorlaufzeit liegt, wird nach dem FIFO-Prinzip gelöscht. FIFO bedeutet hierbei, daß die einkommenden Audio-Daten eines bestimmten Zeitraums nach dem First-In-First-Out-Prinzip gespeichert und gelöscht werden.

Sowohl die Zeitpunkte und Zeiträume VTL, VT als auch REC können mittels der Eingabemittel mit einer Markierung (Index) versehen werden, damit sie wieder auffindbar sind und auch der tatsächliche Track-Anfang editierbar ist.

Als weiteres Merkmal der Aufnahme-, Verarbeitungs- und Übertragungseinrichtung ist ein schneller Vor-/Rücklauf vorgesehen. Hierbei ist es auch möglich, verschiedene Stufen eines schnellen Vor-/Rücklaufs vorzusehen. Beim schnellen Vor-/Rücklauf wird nur jedes n-te Frame wiedergegeben, wobei n eine Zahl größer als 2 ist. Beim schnellen Vor- bzw. Rücklauf erhält auch der Decoder einen schnelleren Arbeitstakt, so daß das Tonsignal in einer höheren Tonhöhe abgespielt wird. Es ist aber auch möglich, beim schnellen Vor- und Rücklauf die Tonhöhe der Wiedergabe beizubehalten bzw. die Tonhöhe des Tonsignals nicht unter Abtastung der Original-Tonhöhe anzupassen.

Schließlich ist es mit den Eingabemitteln der Aufnahme- und Übertragungsvorrichtung auch möglich, den aufzuzeichnenden Audiosignalen Informationen über Adreßdaten, wie beispielsweise ISDN- oder e-mail-Daten einzugeben, so daß diese Adreßdateninformationen, die den aufzuzeichnenden Audiosignalen zugeordnet sind, von dem Mikrocontroller 25 oder der externen Verarbeitungseinrichtung ausgewertet werden können, so daß beispielsweise die aufgezeichneten Aufzeichnungsinformationen automatisch an die gewünschte Adresse versendet werden.

Die beschriebene Aufnahme-, Verarbeitungs- und Übertragungseinrichtung eignet sich in besonders guter Weise als Aufzeichnungsgerät für Journalisten, welche die Audioaufzeichnung mit möglichst guter Aufnahmequalität schnell und sicher an ihre Redaktion versenden möchten, damit der Beitrag so schnell wie möglich in den Medien publiziert werden kann.

Es folgen weitere Ausführungsbeispiele der Erfindung (mit Bezugszeichen anhand der Zeichnungen):
- Ausführungsbeispiel 1:: Aufnahme-, Verarbeitungs- und Übertragungsvorrichtung (1) zum Speichern, Verarbeiten und Übertragen von Audio-Signalen, mit einem analogen Audio-Signaleingang (9; 11), insbesondere einem Mikrofon oder einem Mikrofoneingangsanschluß (11), einer Konvertierungseinrichtung (29) zum Verarbeiten analoger Audio-Signale in digitale Audio-Daten und einem Speichermedium (43) zum Speichern der digitalen Audio-Daten, mit den weiteren Merkmalen, daß das Speichermedium (43) für einen ständigen Verbleib in der Vorrichtung (1) vorgesehen ist und die Vorrichtung (1) eine Schnittstelle (45) für eine Übertragung der digitalen Audio-Daten zu einer vorrichtungsextemen Verarbeitungseinrichtung aufweist.
- Ausführungsbeispiel 2:: Vorrichtung nach Ausführungsbeispiel 1, mit einem analogen Hochpegel-Eingangsanschluß (9) und/oder einem digitalen Eingangsanschluß (33) für Audio-Signale.
- Ausführungsbeispiel 3:: Aufnahme-, Verarbeitungs- und Übertragungsvorrichtung (1) zum Speichern, Verarbeiten und Übertragen von Audio-Daten, mit einem Eingangsanschluß (33) für digitale Audio-Daten und einem Speichermedium (43) zum Speichern der digitalen Audio-Daten, mit den weiteren Merkmalen, daß das Speichermedium (43) für einen ständigen Verbleib in der Vorrichtung (1) vorgesehen ist und die Vorrichtung (1) eine Schnittstelle (45) für eine kabellose Übertragung der digitalen Audio-Daten zu einer vorrichtungsexternen Verarbeitungseinrichtung aufweist.
- Ausführungsbeispiel 4:: Vorrichtung nach einem der vorstehenden Ausführungsbeispiele , mit einer Konvertierungseinrichtung (31) zum Verarbeiten digitaler Audio-Daten in analoge Audio-Signale.
- Ausführungsbeispiel 5:: Vorrichtung nach Ausführungsbeipiel 4, mit einem Kopfhörer oder einem Kopfhörerausgangsanschluß (22).
- Ausführungsbeispiel 6:: Vorrichtung nach einem der vorstehenden Ausführungsbeispiele , mit einer Konvertierungseinrichtung (35) zum Konvertieren der digitalen Audio-Daten in ein datenreduziertes Format.
- Ausführungsbeispiel 7:: Wiedergabevorrichtung (1) zum Wiedergeben von Audio-Signalen, mit einem Kopfhörer oder Kopfhöreranschluß (22), einer Konvertierungseinrichtung (31) zum Verarbeiten digitaler Audio-Daten in analoge Audio-Signale und einem Speichermedium (43) zum Speichern der digitalen Audio-Daten, mit den weiteren Merkmalen, daß das Speichermedium (43) für einen ständigen Verbleib in der Vorrichtung (1) vorgesehen ist und die Vorrichtung (1) eine Schnittstelle (45) für eine kabellose Übertragung der digitalen Audio-Daten zu einer vorrichtungsexternen Verarbeitungseinrichtung aufweist.
- Ausführungsbeispiel 8:: Vorrichtung nach einem der vorstehenden Ausführungsbeispiele, mit den weiteren Merkmalen, daß das Speichermedium (43) ein FlashRAM oder ein dynamisches RAM ist.
- Ausführungsbeispiel 9:: Vorrichtung nach einem der vorstehenden Ausführungsbeispiele, mit den weiteren Merkmalen, daß die Schnittstelle (45) für eine bidirektionale Datenübertragung vorgesehen ist.
- Ausführungsbeispiel 10:: Vorrichtung nach einem der vorstehenden Ausführungsbeispiele, mit den weiteren Merkmalen, daß die Schnittstelle (45) eine Infrarot-Schnittstelle ist.
- Ausführungsbeispiel 11:: Vorrichtung nach einem der vorstehenden Ausführungsbeispiele, mit den weiteren Merkmalen, daß die digitalen Audio-Daten in dem datenreduzierten Format in dem Speichermedium (43) gespeichert werden.
- Ausführungsbeispiel 12:: Vorrichtung nach einem der vorstehenden Ausführungsbeispiele, mit den weiteren Merkmalen, daß die digitalen Audio-Daten in dem datenreduzierten Format über die kabellose Übertragungsschnittstelle (45) übertragen werden.
- Ausführungsbeispiel 13:: Vorrichtung nach einem der vorstehenden Ausführungsbeispiele, mit einem analogen und/oder einem digitalen Audio-Ausgangsanschluß (23, 34).
- Ausführungsbeispiel 14:: Vorrichtung nach einem der vorstehenden Ausführungsbeispiele, mit einer Konvertierungseinrichtung (35) zum Dekodieren datenreduzierter Audio-Daten.
- Ausführungsbeispiel 15:: Vorrichtung nach einem der vorstehenden Ausführungsbeispiele, mit einer Eingabeeinrichtung (41) zur Eingabe von Steuerbefehlen zur Steuerung der Vorrichtung (1).
- Ausführungsbeispiel 16:: Vorrichtung nach einem der vorstehenden Ausführungsbeispiele, mit einer Anzeigeeinrichtung (39) zur Anzeige von Steuerinformationen.
- Ausführungsbeispiel 17:: Vorrichtung nach einem der vorstehenden Ausführungsbeispiele, mit den weiteren Merkmalen, daß die Vorrichtung (1) tragbar ist.
- Ausführungsbeispiel 18:: Vorrichtung nach einem der vorhergehenden Ausführungsbeispiele, mit den weiteren Merkmalen, daß die Aufnahmevorrichtung sich ständig im Aufnahmebetrieb befindet und auch Audiosignale aufzeichnet, wenn eine hierfür vorgesehene Aufnahmeeingabeeinrichtung noch nicht betätigt worden ist.
- Ausführungsbeispiel 19:: Vorrichtung nach Ausführungsbeispiel 18, mit den weiteren Merkmalen, daß solange die Aufnahmeeingabeeinrichtung noch nicht betätigt worden ist, für einen vorbestimmten zurückliegenden Zeitraum Audiosignale aufgenommen und zwischengespeichert werden und für den Fall, daß die Aufnahmeeingabeeinrichtung betätigt wird, bereits aufgenommene Audiosignale Teil derjenigen Gesamtaufnahme bilden, welche durch die Betätigung der Aufnahmeeingabeeinrichtung bestimmt ist.
- Ausführungsbeispiel 20:: Vorrichtung nach einem der vorhergehenden Ausführungsbeispiele, mit den weiteren Merkmalen, daß die Vorrichtung Mittel zur Eingabe und Speicherung von elektronischen Adreßinformationen, beispielsweise ISDN- oder e-mail-Daten, aufweist und daß die aufgezeichneten Audiosignalen zugeordneten elektronischen Adreßinformationen von der Vorrichtung oder der vorrichtungsexternen Verarbeitungseinrichtung bestimmungsgemäß auswertbar ist.
- Ausführungsbeispiel 21:: Vorrichtung nach einem der vorhergehenden Ausführungsbeispiele, mit den weiteren Merkmalen, daß die Vorrichtung einen einstufigen oder mehrstufigen schnellen Vor- und/oder Rücklauf aufweist, bei dem nur jedes n-te Datenframe abgespielt wird und n größer als 1 ist.
- Ausführungsbeispiel 22:: Vorrichtung nach Ausführungsbeipiel 21, mit den weiteren Merkmalen, daß der Decoder schneller getaktet ist bzw. schneller arbeitet als bei der Normalwiedergabe und das Tonsignal mit einer höheren Tonhöhe abgespielt wird.
- Ausführungsbeispiel 23:: Vorrichtung nach Ausführungsbeipiel 21, mit den weiteren Merkmalen, daß beim schnellen Vor- und/- oder Rücklauf des Tonsignals der Decoder schneller arbeitet bzw. schneller getastet wird als üblich und die Tonhöhe des Tonsignals durch Unterabtastung der Original-Tonhöhe angepaßt ist.
- Ausführungsbeispiel 24:: Vorrichtung nach einem der vorhergehenden Ausführungsbeispiele, mit den weiteren Merkmalen, daß die Schnittstelle als kabellose oder kabelbehaftete Schnittstelle ausgeführt ist.

## Patentansprüche

1. Verfahren zum Codieren von Signalen (T_{E}), insbesondere digitalisierten Tonsignalen, mit einer Codiereinrichtung (C1, C2) zur Codierung (T_{E}) des Signals in einem Codierformat und einer Verarbeitungseinrichtung (U1, U2, SP, D1) zur Verarbeitung des codierten Signals,
**dadurch gekennzeichnet, daß** das Codierformat in Abhängigkeit von den Eigenschaften der Verarbeitungseinrichtung (U1, U2, SP, D1) bestimmt wird.

2. Verfahren nach Anspruch 1,
**dadurch gekennzeichnet, daß** die Verarbeitungseinrichtung (U1, U2, SP, D1) eine Übertragungseinrichtung (U1, U2) zum Übertragen des codierten Signals (T_{E}) und/oder eine Speichereinrichtung (SP) zur Speicherung des codierten Signals (T_{E}) und/oder eine Decodiereinrichtung (D1) zur Decodierung des codierten Signals (T_{E}) ist.

3. Verfahren nach einem der Ansprüche 1 oder 2,
**dadurch gekennzeichnet, daß** die Verarbeitungseinrichtung (U1, U2, SP, D1) eine Übertragungseinrichtung (U1, U2) zum Übertragen des codierten Signals (T_{E}) ist, und daß die Übertragungseinrichtung (U1, U2) zum gleichzeitigen Senden und Empfangen des codierten Signals benutzt wird.

4. Verfahren nach einem der vorstehenden Ansprüche,
**dadurch gekennzeichnet, daß** die Verarbeitungseinrichtung (U1, U2, SP, D1) eine Übertragungseinrichtung (U1, U2) zum Übertragen des codierten Signals (T_{E}) ist, und daß die Übertragungseinrichtung (U1, U2) eine Decodiereinrichtung aufweist zum gleichzeitigen Decodieren bei dem Empfangen eines codierten Signals.

5. Verfahren nach einem der vorstehenden Ansprüche,
**dadurch gekennzeichnet, daß** vor der Bestimmung des Codierformates die Eigenschaften der Verarbeitungseinrichtung (U1, U2, SP, D1) mittels eines an die Verarbeitungseinrichtung gerichteten Testsignals ermittelt werden.

6. Verfahren nach einem der vorstehenden Ansprüche,
**dadurch gekennzeichnet, daß** als Eigenschaft der Verarbeitungseinrichtung (U1, U2, SP, D1) deren Prozessorleistungsfähigkeit herangezogen wird, so daß das Codierformat derart bestimmt wird, daß es von der Verarbeitungseinrichtung (U1, U2, SP, D1) in Echtzeit verarbeitet wird.

7. Verfahren nach Anspruch 6,
**dadurch gekennzeichnet, daß** die Verarbeitungseinrichtung (U1, U2, SP, D1) eine Übertragungseinrichtung (U1, U2) zum Übertragen des codierten Signals (T_{E}) ist, und daß das Codierformat in Abhängigkeit von der Leistungsfähigkeit der Übertragungseinrichtung (U1, U2) bestimmt wird, so daß die Übertragungseinrichtung (U1, U2) die Übertragung in Echtzeit vornehmen kann.

8. Verfahren nach einem der vorstehenden Ansprüche,
**dadurch gekennzeichnet, daß** die Eigenschaften der Verarbeitungseinrichtung (U1, U2, SP, D1) vor der Codierung aus einem Speicher (M) abgerufen werden.

9. Verfahren nach einem der vorstehenden Ansprüche,
**dadurch gekennzeichnet, daß** vor der Codierung des Signals (T_{E}) mittels einer Anzeige/Eingabeeinrichtung (N) der Benutzer der Codiereinrichtung (C1, C2) um die Vorgabe des gewünschten Codierformates und/oder die Vorgabe der Eigenschaften der gewählten Verarbeitungseinrichtung (U1, U2, SP, D1) gebeten wird und die Codierung nach der Vorgabe vorgenommen wird.

10. Verfahren nach einem der vorstehenden Ansprüche,
**dadurch gekennzeichnet, daß** das Signal (T_{E}) vor dem Codieren digitalisiert wird.

11. Verfahren nach einem der vorstehenden Ansprüche,
**dadurch gekennzeichnet, daß** das Signal (T_{E}) in einem bitratenreduzierten Codierformat codiert wird.

12. Verfahren nach einem der vorstehenden Ansprüche,
**dadurch gekennzeichnet, daß** es sich bei dem Signal (T_{E}) um ein digitalisiertes Tonsignal handelt und das Signal (T_{E}) unter Berücksichtigung psycho-akustischer Phänomene quellencodiert wird.

13. Verfahren nach einem der vorstehenden Ansprüche,
**dadurch gekennzeichnet, daß** als Verarbeitungseinrichtungen (U1, U2, SP, D1) Übertragungs- und/oder Speichereinrichtungen verschiedener Kapazität zur Verfügung stehen und vor der Übertragung und/oder der Speicherung der Signale (T_{E}) bei Signalen (T_{E}) höherer Qualität, d.h. größerer Datenmenge, eine Übertragungs- (U1, U2) und/oder Speichereinrichtung (SP) größerer Kapazität gewählt wird und bei der Übertragung und/oder Speicherung von Signalen (T_{E}) von geringerer Qualität, d.h. kleinerer Datenmenge, eine Übertragungs- (U1, U2) und/oder Speichereinrichtung (SP) kleinerer Kapazität gewählt wird.

14. Verfahren nach einem der vorstehenden Ansprüche,
**dadurch gekennzeichnet, daß** es sich bei den zu versendenden Signalen (T_{E}) um Tonsignale handelt, daß die Tonsignale (T_{E}) mittels der Codiereinrichtung (C1, C2) bitratenreduziert codiert werden, daß mehrere Übertragungskanäle (U1, U2) und/oder Bitraten zur Übertragung des Signals (T_{E}) zur Verfügung stehen, und daß der Übertragungskanal (U1, U2) und/oder die Bitrate bei der Übertragung derart gewählt werden, daß das Signal (T_{E}) in Echtzeit übertragen werden kann.

15. Verfahren nach Anspruch 14,
**dadurch gekennzeichnet, daß** zum Betrieb in Echtzeit von einer fest vorgegebenen Rechenleistung ausgegangen wird.

16. Verfahren nach den Ansprüchen 4 und 15 und nach einem der vorstehenden Ansprüche,
**dadurch gekennzeichnet, daß** bei gleichzeitigem Senden und Empfangen in Echtzeit die Codierformate der Codier- und Decodiereinrichtung entsprechend der vorgegebenen Rechenleistung gewählt werden.

17. Verfahren nach Anspruch 16,
**dadurch gekennzeichnet, daß** mittels einer Eingabeeinrichtung eine Voreinstellung hinsichtlich der Verteilung der Rechenleistung und somit der Wahl des Codierformates hinsichtlich einer Präferenz für die Codiereinrichtung oder die Decodiereinrichtung oder einer Gleichstellung beider erfolgt.

18. Verfahren zum Codieren von Signalen (T_{E}), insbesondere digitalisierten Tonsignalen, mit einer Codiereinrichtung (C1, C2) zur Codierung (T_{E}) des Signals in einem Codierformat und einer Verarbeitungseinrichtung (U1, U2, SP, D1) zur Verarbeitung des codierten Signals,
**dadurch gekennzeichnet, daß** das Codierformat in Abhängigkeit von den Eigenschaften der Codiereinrichtung (C1, C2) bestimmt wird.

19. Verfahren nach einem der vorstehenden Ansprüche,
**dadurch gekennzeichnet, daß** das Codierformat von einer Steuereinrichtung bestimmt wird.

20. Vorrichtung zum Codieren von Signalen,
**gekennzeichnet durch** eine Steuereinrichtung (K), welche das für die Codierung zu verwendende Codierformat in Abhängigkeit der Eigenschaften einer Verarbeitungseinrichtung (U1, U2, SP, D1) zur weiteren Verarbeitung der Signale (T_{E}) vorgibt.

21. Vorrichtung nach Anspruch 20,
wobei an der Vorrichtung eine mit der Steuereinrichtung (K) verbundene Übertragungseinrichtung (U1, U2) als Verarbeitungseinrichtung zur Übertragung der Signale (T_{E}) an einen Empfänger (D1) angeschlossen ist,
**dadurch gekennzeichnet, daß** das Codierformat mittels der Steuereinrichtung (K) den Eigenschaften der Übertragungseinrichtung (U1, U2) angepaßt ist.

22. Vorrichtung nach Anspruch 21,
**dadurch gekennzeichnet, daß** das Codierformat mittels der Steuereinrichtung (K) der Bitrate der Übertragungseinrichtung (U1, U2) angepaßt ist.

23. Vorrichtung nach einem der Ansprüche 20 bis 22,
mit einer mit der Steuereinrichtung (K) verbundenen Speichereinrichtung (SP) als Verarbeitungseinrichtung zur Speicherung der Signale (T_{E}),
**dadurch gekennzeichnet, daß** das Codierformat mittels der Steuereinrichtung (K) den Eigenschaften der Speichereinrichtung (SP) angepaßt ist.

24. Vorrichtung nach einem der Ansprüche 20 bis 23,
mit einer mit der Steuereinrichtung (K) verbundenen Decodiereinrichtung (D1) als Verarbeitungseinrichtung zur Decodierung der Signale (T_{E}),
**dadurch gekennzeichnet, daß** das Codierformat mittels der Steuereinrichtung (K) den Eigenschaften der Decodiereinrichtung (D1) angepaßt ist.

25. Vorrichtung nach einem der Ansprüche 20 bis 24,
mit einer mit der Steuereinrichtung verbundenen Übertragungs- (U1, U2) und/oder Speicher- (SP) und/oder Decodiereinrichtung (D1),
**dadurch gekennzeichnet, daß** die Steuereinrichtung (K) einen Testsignalgeber aufweist, welcher ein Testsignal aussendet, mit dessen Hilfe die Steuereinrichtung (K) die Eigenschaften der angeschlossenen Verarbeitungseinrichtung (U1, U2, SP, D1) feststellt und das Codierformat entsprechend dieser Eigenschaften wählt.

26. Vorrichtung nach Anspruch 21,
**dadurch gekennzeichnet, daß** die Steuereinrichtung (K) einen Testsignalempfänger aufweist, welcher ein Testsignal empfängt, mit dessen Hilfe die Steuereinrichtung (K) die Eigenschaften der angeschlossenen Verarbeitungseinrichtung (U1, U2, SP, D1) feststellt und das Codierformat entsprechend dieser Eigenschaften wählt.

27. Vorrichtung nach einem der Ansprüche 25 oder 26,
**dadurch gekennzeichnet, daß** das Testsignal ein codiertes Tonsignal ist.

28. Vorrichtung nach einem der Ansprüche 20 bis 27,
**gekennzeichnet durch** eine mit der Steuereinrichtung (K) verbundene Anzeige-/Eingabeeinrichtung (N) mittels derer ein von der Vorrichtung zu verwendendes Codierformat vorgebbar ist.

29. Vorrichtung nach einem der Ansprüche 20 bis 28,
**gekennzeichnet durch** eine mit der Steuereinrichtung (K) verbundene Speichereinheit (M), in der mindestens ein Codierformat abgespeichert ist.

30. Vorrichtung nach Anspruch 29,
**dadurch gekennzeichnet, daß** in der Speichereinheit (M) die Eigenschaften der Verarbeitungseinrichtung (U1, U2, SP, K) und die den Eigenschaften entsprechenden Codierformate gespeichert sind.

31. Vorrichtung nach einem der Ansprüche 20 bis 30,
**dadurch gekennzeichnet, daß** alle Einstellungen manuell durchführbar sind.

32. Vorrichtung nach einem der Ansprüche 20 bis 31,
**dadurch gekennzeichnet, daß** eine Anzeige vorgesehen ist, welche die aktuelle Übertragungszeit der Übertragungseinrichtung (U1, U2)/Speicherzeit der Speichereinrichtung (SP) und/oder die verbleibende Übertragungszeit der Übertragungseinrichtung (U1, U2)/Speicherzeit der Speichereinrichtung (SP) anzeigt.

33. Vorrichtung nach einem der Ansprüche 20 bis 32,
**dadurch gekennzeichnet, daß** eine Mischstufe vorgesehen ist, welche vor der Übertragung mit der Übertragungseinrichtung (U1, U2) und/oder Speicherung mit der Speichereinrichtung (SP) mehrere monophone und/oder stereophone Tonsignale zusammenmischt.

34. Vorrichtung nach einem der Ansprüche 20 bis 33,
**dadurch gekennzeichnet, daß** das mit der Übertragungseinrichtung (U1, U2) zu übertragende und/oder mit der Speichereinrichtung (SP) zu speichernde und/oder von der Übertragungseinrichtung (U1, U2) empfangene Signal in einer Abhöreinrichtung abhörbar ist.

35. Vorrichtung nach einem der Ansprüche 20 bis 34,
**dadurch gekennzeichnet, daß** der Pegel des mit der Übertragungseinrichtung (U1, U2) zu übertragenden und/oder mit der Speichereinrichtung (SP) zu speichernden und/oder von der Übertragungseinrichtung (U1, U2) empfangenen Signals mittels einer Pegelanzeige angezeigt werden kann.

36. Vorrichtung nach einem der Ansprüche 20 bis 35,
**dadurch gekennzeichnet, daß** für verschiedene Verarbeitungseinrichtungen (U1, U2, SP, D1) jeweils eine Steuereinrichtung (K) vorgesehen ist, wobei die einzelnen Steuereinrichtungen (K) die Eigenschaften der von ihr abgefragten Verarbeitungseinrichtung (U1, U2, SP, D1) mit einer oder mehreren der anderen Steuereinrichtungen (K) austauschen.
